# EUROPÄISCHE PATENTSCHRIFT

(11) **EP 1 957 553 B1**
(45) Veröffentlichungstag und Bekanntmachung des Hinweises auf die Patenterteilung: **27.01.2010**
(21) Anmeldenummer: 06828975.0
(22) Anmeldetag: 09.11.2006
(51) Int. Cl.: C08G 18/10, C08K 3/36, C09J 175/04

(54) **KIESELSÄUREGEFÜLLTER, SILANVERNETZENDER KLEB-, DICHT- ODER BESCHICHTUNGSSTOFF UND SEINE VERWENDUNG**
SILANE-CROSSLINKING ADHESIVE, SEALANT OR COATING WITH A SILICIC ACID FILLER AND USE THEREOF
SUBSTANCE ADHESIVE, D'ETANCHEITE OU D'ENDUCTION A RETICULATION SILANE CHARGEE D'ACIDE SILIQUE ET SON UTILISATION

(30) Priorität: 10.11.2005 DE 102005054008
(43) Veröffentlichungstag der Anmeldung: 20.08.2008
(73) Patentinhaber: Henkel AG & Co. KGaA, 40589 Düsseldorf (DE)
(72) Erfinder: LOTH, Helmut, 42781 Haan (DE); SCHMIDT, Oliver, 40764 Langenfeld (DE); SUMSER, Markus, 44625 Herne (DE); BECK, Horst, 41470 Neuss-Rosellen (DE); LAMBERTZ, Jennifer, 40764 Langenfeld (DE)
(86) Internationale Anmeldenummer: PCT/EP2006/010738
(87) Internationale Veröffentlichungsnummer: WO 2007/054300

(56) Entgegenhaltungen:
- EP-A- 1 256 595
- WO-A-01/12693
- WO-A2-2005/003201
- US-A- 5 554 709

## Beschreibung

Die vorliegende Erfindung betrifft einen silanvernetzenden Kleb-, Dicht- oder Beschichtungsstoff, der ein Polymer mit einem organischen Grundgerüst, das mindestens zwei Alkoxy- oder Acyloxysilangruppen, die auch als Alkoxy- oder Acyloxysilylgruppen bezeichnet werden, und mindestens einen Füllstoff enthält.

Silanvernetzende Kleb- und Dichtstoffmassen enthalten als Bindemittel alkoxysilylterminierte Polymere. Polymersysteme, die Ober reaktive Alkoxysilylgruppen verfügen, sind seit langem bekannt. In Gegenwart von Luftfeuchtigkeit sind diese alkoxysilylterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Die Polymere weisen in der Regel ein organisches Grundgerüst auf, das Alkoxysilylgruppen beziehungsweise Alkoxysilangruppen trägt. Bei dem organischen Grundgerüst kann es sich beispielsweise um Polyurethane, Polyester, Polyether, Polyole, Polyacrylate oder -methacrylate, Polyvinylalkohole etc. handeln.

So ist beispielsweise eine einkomponentige Reaktivsystem-Zusammensetzung bekannt, die ein alkoxysilylterminiertes Polyurethan, einen Aushärtungskatalysator sowie gegebenenfalls übliche Zusatzstoffe enthält.

WO 03/068886 A1 offenbart feuchtigkeitshärtende Klebstoffe, die neben einem Polymer mit reaktiven Siliciumendgruppen verschiedene weitere Bestandteile aufweisen können. So werden verschiedene Füllstoffe genannt, unter anderem solche mit niedriger Oberfläche.

Es ist Aufgabe der vorliegenden Erfindung silanvernetzende Kleb-, Dicht- oder Beschichtungsstoffe anzugeben, die verbesserte mechanische Eigenschaften aufweisen. Insbesondere sollen die Anfangsfestigkeiten, Zugscherfestigkeiten und die Adhäsion deutlich verbessert werden.

Überraschenderweise wurde gefunden, dass diese Aufgabe durch die Verwendung von hochdisperser Kieselsäure mit einer niedrigen BET-Oberfläche als Füllstoff gelöst werden kann.

Gegenstand der vorliegenden Erfindung ist daher ein silanvernetzender Kleb-, Dicht- oder Beschichtungsstoff der eingangs genannten Art, der dadurch gekennzeichnet ist, dass das als Bindemittel in dem erfindungsgemäßen Kleb-, Dicht- oder Beschichtungsstoff enthaltene Polymer der allgemeinen Formel (I) entspricht 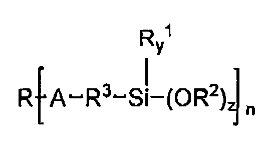 in der R ein organisches Grundgerüst ist, A eine, Carbamat- oder Urethanbindung beschreibt, R¹ ein Alkylrest mit 1 bis 4 C-Atomen oder OR² ist, R² ein Alkylrest mit 1 bis 4 C-Atomen oder ein Acylrest mit 1 bis 4 C-Atomen ist, R³ ein geradkettiger oder verzweigter, substituierter oder unsubstituierter Alkylenrest mit 1 bis 8 C-Atomen ist, y = 0 bis 2 ist, z = 3 - y ist und n = 1 bis 10000 ist, wobei die Silylreste gleich oder verschieden sein können und im Falle von mehreren Resten R¹ bzw. R² ebenfalls jeweils gleich oder verschieden sein können und
der Füllstoff mindestens teilweise aus hochdisperser Kieselsäure mit einer BET-Oberfläche von 10 bis 90 m²/g besteht und in einer Menge von 1 bis 60 Gew.-% bezogen auf das Gesamtgewicht des Kleb-, Dicht- oder Beschichtungsstoffs in diesem enthalten ist.

Die Verwendung der hochdispersen Kieselsäure mit der genannten BET-Oberfläche in den erfindungsgemäßen Kleb-, Dicht- oder Beschichtungsstoffen weist neben der Verbesserung der mechanischen Eigenschaften weitere Vorteile auf.

Die Einarbeitungszeit von Kieselsäuren mit höherer BET-Oberfläche, wie sie im Stand der Technik verwendet wird, dauert vergleichsweise lang. Somit ist die Einarbeitung kostenintensiv. Darüber hinaus werden erhebliche Mengen Luft in das Produkt eingebracht, die wiederum umständlich und langwierig entfernt werden muss. Überraschenderweise wurde gefunden, dass sich die Einarbeitungszeit bei Einsatz der hochdispersen Kieselsäure mit einer BET-Oberfläche von 10 bis 90 m²/g stark verkürzt. So ist die Einarbeitungszeit bei einer BET-Oberfläche von 35 bis 65 m²/g um 30 bis 50 % verkürzt. Ein weiterer Vorteil liegt darin, dass sich die genannte hochdisperse Kieselsäure in silanterminierte Kleb-, Dicht- oder Beschichtungsstoffe in erheblich höherer Konzentration einarbeiten lässt, ohne dass die Transparenz und die Fließeigenschaften der Kleb-, Dicht- oder Beschichtungsstoffe beeinträchtigt werden.

Das organische Grundgerüst ist vorteilhaft ausgewählt aus der Gruppe umfassend Alkydharze, ölmodifizierte Alkydharze, ungesättigte Polyester, natürliche Öle, z. B. Leinöl, Tungöl, Sojabohnenöl, sowie Epoxide, Polyamide, thermoplastische Polyester wie z. B. Polyethylenterephthalät und Polybutylenterephthalat, Polycarbonate, Polyethylene, Polybutylene, Polystyrole, Polypropylene, Ethylenpropylenco- und Terpolymere, Acrylate, z. B. Homo- und Copolymere von Acrylsäure, Acrylaten, Methacrylaten, Acrylamiden, ihren Salzen und dergleichen, Phenolharze, Polyoxymethylenhomo- und -copolymere, Polyurethane, Polysulfone, Polysulfidkautschuke, Nitrocellulose, Vinylbutyrate, Vinylpolymere, z. B. Vinylchlorid und/oder Vinylacetat enthaltende Polymere, Ethylcellulose, Celluloseacetate und -butyrate, Reyon, Schellack, Wachse, Ethylencopolymere wie z. B. Ethylenvinylacetatcopolymere, Ethylenacrylsäurecopolymere, Ethylenacrylatcopolymere, organische Kautschuke, Silikonharze und dergleichen. Weitere Beispiele schließen Polyether wie Polyethylenoxid, Polypropylenoxid und Polytetrahydrofuran, Polyol, Polyacrylat, Polymethacrylat, Polyvinylalkohol ein. Von den genannten polymeren Grundgerüsten werden Polyether, Polyester, Polyurethane und Polyole besonders bevorzugt.

Vorteilhaft beträgt der Anteil der hochdispersen Kieselsäure mit einer BET-Oberfläche von 35 bis 65 m²/g 5 bis 50 Gew.-%, insbesondere größer 90 Gew.-%, bezogen auf das Gesamtgewicht des Kleb-, Dicht- oder Beschichtungsstoffs. Besonders bevorzugt sind Gehalte von 15 bis 35 Gew.-%, insbesondere 20 bis 25 Gew.-%. Die BET-Oberfläche der hochdispersen Kieselsäure beträgt vorzugsweise < 90 m²/g, vorzugsweise 35 bis 65 m²/g, besonders bevorzugt 45 bis 55 m²/g. Ganz besonders bevorzugt ist Kieselsäure mit einer BET-Oberfläche von etwa 50 m²/g.

Neben dieser Kieselsäure kann der Kleb-, Dicht- oder Beschichtungsstoff zusätzlich weitere Füllstoffe enthalten, wie sie bisher im Stand der Technik verwendet worden sind. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Quartz, Flint, Glimmer und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Kohlefaser, Kevlarfaser oder auch Polyethylenfasern zugesetzt werden. Aluminiumpulver ist ebenfalls als Füllstoff geeignet.

Für manche Anwendungen sind Füllstoffe bevorzugt, die den Zubereitungen Thixotropie verleihen, z. B. hydrogeniertes Rizinusöl, Fettsäureamide oder quellbare Kunststoffe wie PVC. Um gut aus einer geeigneten Dosiervorrichtung (z. B. Tube) auspressbar zu sein, besitzen solche Zusammensetzungen eine Viskosität von 30000 bis 150000, vorzugsweise von 40000 bis 80000 mPas oder auch 50000 bis 60000 mPas.

Die erfindungsgemäß einzusetzende Kieselsäure weist vorteilhaft eine durch Laserbeugung gemessene mittlere Teilchengröße d₅₀ von weniger als 25 µm, bevorzugt von 5 bis 25 µm auf.

Als weitere Bestandteile kann der Kleb-, Dicht- oder Beschichtungsstoff die im Stand der Technik bekannten Reaktivverdünner, Weichmacher, Lösemittel, UV-Stabilisatoren, Antioxidantien, Katalysatoren, Trockenmittel, und Haftvermittler enthalten.

So ist es beispielsweise möglich, dass die Viskosität der erfindungsgemäßen Zusammensetzung für bestimmte Anwendungen zu hoch ist. Es wurde jedoch gefunden, dass sich die Viskosität des erfindungsgemäßen Kleb-, Dicht- oder Beschichtungsstoffs in der Regel durch Verwendung eines "Reaktiwerdünners" auf einfache und zweckmäßige Weise verringern lässt, ohne dass die Materialeigenschaften der ausgehärteten Zusammensetzung wesentlich darunter leiden.

Vorzugsweise weist der Reaktivverdünner mindestens eine funktionelle Gruppe auf, die unter Feuchtigkeitseinfluss in der Lage ist, mit einer reaktiven Gruppe des Kleb-, Dicht- oder Beschichtungsstoff unter Kettenverlängerung bzw. Vernetzung zu reagieren (Reaktiwerdünner). Bei der mindestens einen funktionellen Gruppe kann es sich um jede unter Feuchtigkeitseinfluss mit Vernetzung oder Kettenverlängerung reagierende funktionelle Gruppe handeln.

Als Reaktivverdünner eignen sich also alle polymeren Verbindungen, die mit dem Kleb-, Dicht- oder Beschichtungsstoff unter Verringerung der Viskosität mischbar sind und die Materialeigenschaften des nach Aushärtung oder Vernetzung entstehenden Produkts weitgehend unbeeinflusst lassen oder zumindest nicht so nachteilig beeinflussen, dass die Unbrauchbarkeit des Produkts daraus resultiert. Geeignet sind beispielsweise Polyester, Polyether, Polymerisate von Verbindungen mit olefinisch ungesättigter Doppelbindung oder Polyurethane, sofern die oben genannten Vorraussetzungen erfüllt werden.

Vorzugsweise handelt es sich bei den Reaktiwerdünnern jedoch um Polyurethane mit wenigstens einer Alkoxysilylgruppe als reaktive Gruppe.

Die Reaktivverdünner können eine oder mehrere funktionelle Gruppen aufweisen, bevorzugt liegt die Zahl der funktionellen Gruppen jedoch bei 1 bis etwa 6, insbesondere bei etwa 2 bis etwa 4, beispielsweise etwa 3.

Die Viskosität der Reaktiwerdünner beträgt in einer bevorzugten Ausführungsform weniger als etwa 20.000 mPas, insbesondere etwa 1.000 bis etwa 10.000 mPas, beispielsweise etwa 3.000 bis etwa 6.000 mPas (Brookfield RVT, 23°C, Spindel 7, 2,5 U/min).

Die im Rahmen des erfindungsgemäßen Verfahrens einsetzbaren Reaktiwerdünner können eine beliebige Molekulargewichtsverteilung (PD) aufweisen und sind demnach nach den üblichen Methoden der Polymerchemie herstellbar.

Vorzugsweise werden als Reaktiwerdünner Polyurethane eingesetzt, die aus einer Polyolkomponente und einer Isocyanatkomponente und anschließender

Funktionalisierung mit einer oder mehreren Alkoxysilylgruppen hergestellt werden können.

Der Begriff "Polyolkomponente" umfasst dabei im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h. eine Verbindung mit mehr als einer OH-Gruppe im Molekül.

Als Polyolkomponente zur Herstellung der Reaktivverdünner kann eine Vielzahl von Polyolen eingesetzt werden. Beispielsweise sind dies aliphatische Alkohole mit zwei bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol und höhere Glykole, sowie andere polyfunktionelle Alkohole.

Ebenfalls zum Einsatz als Polyolkomponente geeignet sind Polyether, die durch Vinylpolymere modifiziert wurden. Derartige Produkte sind beispielsweise erhältlich, indem Styrol- und/oder Acrylnitril in Gegenwart von Polyethern polymerisiert werden.

Ebenfalls als Polyolkomponente für die Herstellung des Reaktiwerdünners geeignet sind Polyesterpolyole mit einem Molekulargewicht von etwa 200 bis etwa 5.000. So können beispielsweise Polyesterpolyole verwendet werden, die durch die bereits oben beschriebene Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind, wie bereits genannt, 1,4-Hydroxymethylcyclohexan, 2-Methyl-1,3-propandiol, Butandiol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren oder deren reaktiven Derivaten zu Polyesterpolyolen kondensiert werden. Geeignete Dicarbonsäuren und Tricarbonsäuren sowie geeignete Alkohole wurden bereits oben genannt.

Im Rahmen der vorliegenden Erfindung besonders bevorzugt als Polyolkomponente zur Herstellung der Reaktivverdünner eingesetzte Polyole sind beispielsweise Dipropylenglykol und/oder Polypropylenglykol mit einem Molekulargewicht von etwa 400 bis etwa 2500 g/mol sowie Polyesterpolyole, bevorzugt Polyesterpolyole, erhältlich durch Polykondensation von Hexandiol, Ethylenglykol, Diethylenglykol oder Neopentylglykol oder Gemischen aus zwei oder mehr davon und Isophthalsäure oder Adipinsäure oder deren Gemische.

Ebenfalls als Polyolkomponente zur Herstellung der Reaktivverdünner geeignet sind Polyacetale. Unter Polyacetalen werden Verbindungen verstanden, wie sie aus Glykolen, beispielsweise Diethylenglykol oder Hexandiol mit Formaldehyd erhältlich sind. Im Rahmen der Erfindung einsetzbare Polyacetale können ebenfalls durch die Polymerisation zyklischer Acetale erhalten werden.

Weiterhin als Polyol zur Herstellung der Reaktiwerdünner geeignet sind Polycarbonate. Polycarbonate können beispielsweise durch die Reaktion von Diolen wie Propylenglykol, Butandiol-1,4- oder Hexandiol-1,6-, Diethylenglykol, Triethylenglykol oder Tetraethylenglykol oder Gemischen aus zwei oder mehr davon, mit Diarylcarbonaten, beispielsweise Diphenylcarbonat oder Carbonyldichlorid erhalten werden.

Ebenfalls als Polyolkomponente zur Herstellung der Reaktivverdünner geeignet sind OH-Gruppen tragende Polyacrylate. Diese Polyacrylate sind beispielsweise erhältlich durch die Polymerisation von ethylenisch ungesättigten Monomeren, die eine OH-Gruppe tragen. Solche Monomere sind beispielsweise durch die Veresterung von ethylenisch ungesättigten Carbonsäuren und bifunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Zur Herstellung der erfindungsgemäß bevorzugten Reaktiwerdünner wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt. Zur Herstellung der Reaktiwerdünner besonders geeignet sind die oben bereits genannten Polyisocyanate.

Vorzugsweise weist die im Rahmen der vorliegenden Erfindung als Reaktivverdünner vorliegende Verbindung mindestens eine Alkoxysilylgruppe auf, wobei unter den Alkoxysilylgruppen die Di- und Trialkoxysilylgruppen bevorzugt sind.

Zur Reduzierung der Viskosität der erfindungsgemäßen Polyurethane lassen sich neben oder anstatt eines Reaktiwerdünners auch Lösungsmittel und / oder Weichmacher einsetzen.

Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da hier die Lagerstabilität steigt. C₁-C₁₀-Alkohole, besonders Methanol, Ethanol, i-Propanol, Isoamylalkohol und Hexanol werden bevorzugt.

Der Kleb-, Dicht- oder Beschichtungsstoff kann ferner hydrophile Weichmacher enthalten. Diese dienen zur Verbesserung der Feuchtigkeitsaufnahme und damit zur Verbesserung der Reaktivität bei niedrigen Temperaturen. Als Weichmacher geeignet sind beispielsweise Ester der Abietinsäure, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf).

Beispielsweise eignen sich von den Phthalsäureestem Dioctylphthalat, Dibutylphthalat oder Butylbenzylphthalat, von den Adipaten Dioctyladipat, Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Besonders bevorzugt sind jedoch endgruppenverschlossene Polyethylenglykole, wie Polyethylen- oder Polypropylenglykoldialkylether, wobei der Alkylrest ein- bis vier C-Atome beträgt, und insbesondere die Dimethyl- und Diethylether von Diethylenglykol und Dipropylenglykol. Insbesondere mit Dimethyldiethylenglykol wird eine auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Als Katalysatoren zur Steuerung der Härtungsgeschwindigkeit sind beispielsweise metallorganische Verbindungen wie Eisen- oder Zinnverbindungen geeignet, insbesondere die 1,3-Dicarbonylverbindungen des Eisens oder des zwei- bzw. vierwertigen Zinns, insbesondere die Zinn-(II)-carboxylate beziehungsweise die Dialkylzinn-(IV)-Dicarboxylate oder die entsprechenden Dialkoxylate, z.B. Dibutylzinndilaurat, Dibutylzinndiacetat, Dioctylzinndiacetat, Dibutylzinnmaleat, Znn(II)octoat, Zinn(II)phenolat oder die Acetylacetonate des zwei- bzw. vierwertigen Zinns. Ferner kann man auch Alkyltitanate, Siliziumorganische Titanverbindungen oder Bismut-tris-2-ethylhexanoat, saure Verbindungen wie Phosphorsäure, p-Toluolsulfonsäure oder Phthalsäure, aliphatische Amine wie Butyl-, Hexyl-, Octyl- Decyl- oder Laurylamin, aliphatische Diamine wie z.B. Ethylendiamin, Hexyldiamin oder auch aliphatische Polyamine wie Diethylentriamin, Triethylentetramin, Tetraethylenpentamin, heterocyklische N-Verbindungen, z.B. Piperidin, Piperazin, aromatische Amine wie m-Phenylendiamin, Ethanolamin, Triethylamin und andere Härtungskatalysatoren für Epoxide einsetzen.

Ferner eignen sich folgende Zinnverbindungen: Ethylsilicat, Dimethylmaleat, Diethylmaleat, Dioctylmaleat, Dimethylphthalat, Diethylphthalat, Dioctylphthalat, Di(n-butyl)zinn(IV)-di(methylmaleat), Di(n-butyl)zinn(IV)-di(butylmaleat), Di(n-octyl)zinn(IV)-di(methylmaleat), Di(n-octyl)zinn(IV)-di(butylmaleat), Di(n-octyl)zinn(IV)-di(iso-cctylmaleat). Di(n-butyl)zinn(IV)sulfid, Di(n-butyl)zinn(IV)oxid, Di(n-octyl)zinn(IV)oxid, (n-Butyl)₂Sn(SCH₂COO), (n-Octyl)₂Sn(SCH₂COO), (n-Octyl)₂Sn(SCH₂CH₂COO), (n-Octyl)₂Sn(SCH₂CH₂COOCH₂CH₂OCOCH₂S), (n-Butyl)₂Sn(SCH₂COO-i-C₈H₁₇)₂, (n-Octyl)₂Sn(SCH₂COO-i-C₈H₁₇)₂, (n-Octyl)₂Sn(SCH₂COO-n(C₈H₁₇)₂.

Chelatbildende Zinnorganyle können ebenso eingesetzt werden, z.B. Di(n-butyl)zinn-(IV)-di(acetylacetonat), Di(n-octyl)zinn-(IV)-di(acetylacetonat), (n-octyl)(n-butyl)-zinn-(IV)-di(acetylacetonat).

Der Kleb-, Dicht- oder Beschichtungsstoff kann außerdem bis zu etwa 20 Gew.-% an üblichen Haftvermittlern (Tackifier) enthalten. Als Haftvermittler geeignet sind beispielsweise Harze, Terpen-Oligomere, Cumaron-/Inden-Harze, aliphatische, petrochemische Harze und modifizierte Phenolharze. Geeignet sind im Rahmen der vorliegende Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester oder Alkohole.

Der Kleb-, Dicht- oder Beschichtungsstoff kann weiterhin bis zu etwa 7 Gew.-%, insbesondere bis zu etwa 5 Gew.-% Antioxidantien enthalten.

Der Kleb-, Dicht- oder Beschichtungsstoff kann auch bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Häufig ist es sinnvoll, die erfindungsgemäßen Kleb-, Dicht- oder Beschichtungsstoffe durch Trockenmittel weiter gegenüber eindringender Feuchtigkeit zu stabilisieren, um die Lagerbarkeit (shelf-life) noch weiter zu erhöhen.

Eine solche Verbesserung der Lagerbarkeit lässt sich beispielsweise durch den Einsatz von Trockenmitteln erreichen. Als Trockenmittel eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Trockenmittel gegenüber in die Zubereitung eingedrungener Feuchtigkeit höher sein, als die Reaktivität der Endgruppen des in der Zusammensetzung vorliegenden erfindungsgemäßen silylgruppentragenden Polymers

Als Trockenmittel eignen sich beispielsweise Isocyanate.

In einer bevorzugten Ausführungsform werden als Trockenmittel jedoch Silane eingesetzt. Beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder -ethylethoxysilan ist möglich. Besonders bevorzugt sind hier Vinyltrimethoxysilan und Tetraethoxysitan hinsichtlich Effizienz und Kosten

Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen silylgruppentragenden Polymers.

Schließlich können als Trockenmittel auch Alkylorthoformiate oder -orthoacetate eingesetzt werden, bsw. Methyl- oder Ethylorthoformiat, Methyl- oder Ethylorthoacetat,

Die erfindungsgemäßen Kleb-, Dicht- oder Beschichtungsstoffe enthalten in der Regel etwa 0 bis etwa 6 Gew.-% Trockenmittel.

Die Herstellung des erfindungsgemäßen Kleb-, Dicht- oder Beschichtungsstoffs erfolgt nach bekannten Verfahren durch inniges Vermischen der Bestandteile in geeigneten Dispergieraggregaten, z. B. einem Schnellmischer.

Die Erfindung betrifft auch die Verwendung des Kleb-, Dicht- oder Beschichtungsstoffs zum Verkleben von Kunststoffen, Metallen, Glas, Keramik, Holz, Holzwerkstoffen, Papier, Papierwerkstoffen, Gummi und Textilien, Verkleben von Fußböden, Abdichten von Bauwerksteilen, Fenstern, Wand- und Bodenbelägen sowie Fugen allgemein. Hierbei können die Materialien jeweils mit sich selbst oder beliebig untereinander verklebt werden. Im Folgenden wird die Erfindung anhand von Ausführungsbeispielen näher erläutert.

### Rohstoffe

| Rohstoffnummer | Handelsname | Allg. Rohstoffbezeichnung |
|---|---|---|
| 1 | - | silanterminiertes organisches Polymer |
| 2 | Aerosil R 8200 | nachbehandelte pyrogene Kieselsäure |
| 3 | Geniosil GF 96 | 3-Aminopropyltrimethoxisilan |
| 4 | Vinylsilan XL 10 | Vinyltrimethoxysilan |
| 5 | Katalysator DBU | 1,8-Diazabicyclo-[5.4.0]-undec-7-en |
| 6 | Durasil H | Microsilica |
| 7 | Aerosil OX 50 | Microsilica |

### Herstellvorschrift für Rohstoff Nr. 1

155,1 g (19 mmol) Polypropylenglykol 8000 (M= 8000 g/mol, OHZ=14,0) wurden in einem 500 ml Dreihalskolben bei 100°C im Vakuum getrocknet. Unter Stickstoffatmosphäre wurde bei 80°C 0,06 g Dibutylzinnlaurat hinzugegeben und anschließend mit 15,3 g (87 mmol) TDI (%NCO=47,8) versetzt. Nach einstündigem Rühren bei 80°C wurde das entstandene Polymer mit 103,4 g (105 mmol) PolyTHF 1000 (M= 1000 g/mol, OHZ=114) versetzt und eine weitere Stunde bei 80°C gerührt. Es wurde mit einer Mischung aus 10,2 g (45 mmol) isocyanatopropyltrimethoxysilan (%NCO=18,3) und 5,5 g (34 mmol) Isocyanatomethyldimethoxymethylsilan (%NCO=25,7) versetzt und eine weitere Stunde bei 80°C gerührt. Das Polymere wurde abgekühlt und mit 6 g Vinyltrimethoxysilan versetzt. Das Produkt wurde feuchtigkeitsdicht unter Stickstoffatmosphäre in einem Glasgefäß gelagert.

### Herstellvorschrift silanterminierter Klebstoffe

Die Herstellung erfolgt im Speedmixer, z. B. SpeedMixer DAC 400 FVZ der Fa. Hauschild Engineering.

### Herstellung Beispiel 1:

1. Einwaage Rohstoff 1
2. Einwaage Rohstoff 4
3. Vermischen mit Speedmixer bei 2000 rpm, 30 Sekunden lang
4. Einwaage Rohstoff 6; 1/3 der jeweiligen Gesamtrohstoffkonzentration
5. Vakuum ziehen
6. Vermischen mit Speedmixer bei 2000 rpm, 30 Sekunden lang
7. Einwaage Rohstoff 6, 1/3 der jeweiligen Gesamtrohstoffkonzentration
8. Vakuum ziehen
9. Vermischen mit Speedmixer bei 2000 rpm, 30 Sekunden lang
10. Einwaage Rohstoff 6, 1/3 der jeweiligen Gesamtrohstoffkonzentration
11. Vakuum ziehen
12. Vermischen mit Speedmixer bei 2000 rpm, 30 Sekunden lang
13. Einwaage Rohstoff 3
14. Vermischen mit Speedmixer bei 2000 rpm, 30 Sekunden lang
15. Einwaage Rohstoff 5
16. Vermischen mit Speedmixer bei 2000 rpm, 30 Sekunden lang

### Herstellung Beispiel 2:

1. Einwaage Rohstoff 1
2. Einwaage Rohstoff 4
3. Vermischen mit Speedmixer bei 2000 rpm, 30 Sekunden lang
4. Einwaage Rohstoff 7; 1/3 der jeweiligen Gesamtrohstoffkonzentration
5. Vakuum ziehen
6. Vermischen mit Speedmixer bei 2000 rpm, 30 Sekunden lang
7. Einwaage Rohstoff 7, 1/3 der jeweiligen Gesamtrohstoffkonzentration
8. Vakuum ziehen
9. Vermischen mit Speedmixer bei 2000 rpm, 30 Sekunden lang
10. Einwaage Rohstoff 7; 1/3 der jeweiligen Gesamtrohstoffkonzentration
11. Vakuum ziehen
12. Vermischen mit Speedmixer bei 2000 rpm, 30 Sekunden lang
13. Einwaage Rohstoff 3
14. Vermischen mit Speedmixer bei 2000 rpm, 30 Sekunden lang
15. Einwaage Rohstoff 5
16. Vermischen mit Speedmixer bei 2000 rpm, 30 Sekunden lang

### Herstellung Vergleich 3 und 4:

1. Einwaage Rohstoff 1
2. Vermischen mit Speedmixer bei 2000 rpm, 30 Sekunden lang
3. Einwaage Rohstoff 4
4. Vermischen mit Speedmixer bei 2000 rpm, 30 Sekunden lang
5. Einwaage Rohstoff 2; 1/3 der jeweiligen Gesamtrohstoffkonzentration
6. Vakuum ziehen
7. Vermischen mit Speedmixer bei 2000 rpm, 30 Sekunden lang
8. Einwaage Rohstoff 2; 1/3 der jeweiligen Gesamtrohstoffkonzentration
9. Vakuum ziehen
10. Vermischen mit Speedmixer bei 2000 rpm, 30 Sekunden lang
11. Einwaage Rohstoff 2; 1/3 der jeweiligen Gesamtrohstoffkonzentration
12. Vakuum ziehen
13. Vermischen mit Speedmixer bei 2000 rpm, 30 Sekunden lang
14. Einwaage Rohstoff 3
15. Vermischen mit Speedmixer bei 2000 rpm, 30 Sekunden lang
16. Einwaage Rohstoff 5
17. Vermischen mit Speedmixer bei 2000 rpm, 30 Sekunden lang

### Klebstoffrezepturen

### Prüfung von Zugscherfestigkeiten:

Prüfkörper verschiedenster Materialien werden als Dreifachbestimmung mit je einem Prüfkörper aus Holz, z. B dreilagigem Buchensperrholz, verklebt und 7 Tage gelagert.
Die Verklebungsfläche misst 2,5 cm x 2,0 cm.
Die Verklebungen erfolgen einseitig. Mittels Zahnspatel wird überflüssiger Klebstoff entfernt. Nach 7 Tagen wird die Zugscherfestigkeit mittels Materialprüfungsgerät der Fa. Zwick, z. B. Gerätetyp Zwick Z01 0 ermittelt.

### Prüfung von Anfangsfestigkeiten:

Zwei Holzprüfkörper, z. B. dreilagiges Buchensperrholz, werden miteinander verklebt. Die Verklebungsfläche misst 2,5 cm x 2,0 cm. Die Verklebungen erfolgen einseitig. Mittels Zahnspatel wird überflüssiger Klebstoff entfernt.
Die Klebefläche wird 2 Minuten lang abgelüftet; Zeitmessung erfolgt mittels digitaler Laborstoppuhr. Daraufhin erfolgt die Verklebung beider Prüfkörper durch 5 Sekunden langes Auflegen eines 5 kg Gewichts durch Anpressen.
Die Prüfung der Zugscherfestigkeit erfolgt darauffolgend sofort und nach 5 Minuten, 15 Minuten, 30 Minuten, 60 Minuten.

Die Zugscherfestigkeit entspricht der jeweiligen Festigkeit. Die Bestimmung erfolgt als Doppelbestimmung.

### Beispiel 1:

**Tabelle 1:**

| Rezepturen: | | | | | | | |
|---|---|---|---|---|---|---|---|
| | | **Beispiel 1** | **Beispiel 2** | **Vergleich 3** | **Vergleich 4** | **Vergleich 5** | **Vergleich 6** |
| Rohstoff Nr.1 | Gew.-% | 70,0 | 70,0 | 79,87 | 79,02 | 79,27 | 70,0 |
| Aerosil R 8200 | Gew.-% | 0 | 0 | 7,98 | 7,98 | 7,98 | 17,25 |
| Durasil H | Gew.-% | 17,25 | 0 | 0 | 0 | 0 | 0 |
| Aerosil OX 50 | Gew.-% | 0 | 17,25 | 0 | 0 | 0 | 0 |
| AMMO/GF96 | Gew.-% | 6,0 | 6,0 | 6,0 | 6,0 | 6,0 | 6,0 |
| Vinylsilan XL 10 | Gew.-% | 6,0 | 6,0 | 6,0 | 6,0 | 6,0 | 6,0 |
| DBU | Gew.-% | 0,75 | 0,75 | 0,15 | 1,00 | 0,75 | 0,75 |
| Gesamt | Gew.-% | 100,00 | 100,00 | 100,00 | 100,00 | 100,00 | 100,00 |

### Vergleich 6: sehr hochviskos; kann nicht verarbeitet werden.

**Tabelle 2:**

| Zugscherfestigkeiten | | | | | |
|---|---|---|---|---|---|
| **Werte in N/mm²** | **Beispiel 1** | **Beispiel 2** | **Vergleich 3** | **Vergleich 4** | **Vergleich 5** |
| ABS | 4,4 | 4,1 | 2,2 | 2,0 | 1,7 |
| PS | 4,1 | 3,1 | 2,6 | 2,3 | 2,1 |
| PMMA | 6,2 | 2,4 | 2,9 | 2,0 | 2,4 |
| Aluminium | 7,4 | 6,0 | 4,5 | 7,1 | 6,6 |
| Kupfer | 8,4 | 6,9 | 5,3 | 6,0 | 6,5 |
| Messing | 8,7 | 6,7 | 7,8 | 6,3 | 7,0 |
| PVC | 7,7 | 5,5 | 6,6 | 6,7 | 5,7 |
| Buche | 8,8 | 6,0 | 7,1 | 6,9 | 6,9 |

**Tabelle 3:**

| Anfangsfestigkeit [N/cm²] Eingelegt nach 2 Minuten | | | | | |
|---|---|---|---|---|---|
| Gerissen nach [min.] | **Beispiel 1** | **Beispiel 2** | **Vergleich 3** | **Vergleich 4** | **Vergleich 5** |
| 0 | 5 | 6 | 1 | 2 | 2 |
| 5 | 39 | 27 | 7 | 15 | 20 |
| 15 | 180 | 69 | 40 | 69 | 91 |
| 30 | 240 | 170 | 113 | 227 | 306 |
| 60 | 342 | 174 | 185 | 374 | 495 |

**Tabelle 4:**

| Technische Daten | | | | | | |
|---|---|---|---|---|---|---|
| Produktinformationen Hochdisperse Kieselsäuren | | | | | | |
| | SiO2-Gehalt | pH wert* | BET-Oberfläche | spez. Gewicht | Öl-Zahl | d50 |
| | % | | m²/g | g/mm | mol/100g | µm |
| Dura-Sil H | >99,0 | 3,0-4,0 | 51+/-2 | 2,2-2,3 | 83 | 10 |
| Aerosil R 8200 | 99,8 | 5,0 | 160+/-25 | 2,2-2,3 | 200 | -- |
| Aerosil OX 50 | >99,8 | 3,8-4,8 | 50+/-15 | 2,2-2,3 | 89 | --- |
| *4 %-ige Dispersion | | | | | | |

## Patentansprüche

1. Silanvernetzender Kleb-, Dicht- oder Beschichtungsstoff, enthaltend ein Polymer, bestehend aus einem organischen Grundgerüst, das mindestens zwei Alkoxy- oder Acyloxysilylgruppen trägt, und mindestens einen Füllstoff, **dadurch gekennzeichnet, dass** das Polymer der allgemeinen Formel (I) 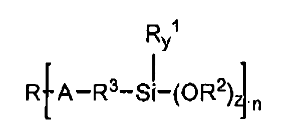
entspricht, in der R ein organisches Grundgerüst ist,
A eine Carbamat- oder Urethanbindung bedeutet,
R¹ ein Alkylrest mit 1 bis 4 C-Atomen oder OR² ist,
R² ein Alkylrest mit 1 bis 4 C-Atomen oder ein Acylrest mit 1 bis 4 C-Atomen ist,
R³ ein geradkettiger oder verzweigter, substituierter oder unsubstituierter Alkylenrest mit 1 bis 8 C-Atomen ist,
y = 0 bis 2 ist,
z = 3 - y ist und
n = 1 bis 10000 ist,
wobei die Silylreste gleich oder verschieden sein können und im Falle von mehreren Resten R¹ bzw. R² diese jeweils gleich oder verschieden sein können und der Füllstoff mindestens teilweise aus hochdisperser Kieselsäure mit einer BET-Oberfläche von 10 bis 90 m²/g besteht und in einer Menge von 1 bis 60 Gew.-% bezogen auf das Gesamtgewicht des Kleb-, Dicht- oder Beschichtungsstoffs in diesem enthalten ist.

2. Kleb-, Dicht- oder Beschichtungsstoff nach Anspruch 1, **dadurch gekennzeichnet, dass** die hochdisperse Kieselsäure eine BET-Oberfläche von 35 bis 65 m²/g aufweist.

3. Kleb-, Dicht- oder Beschichtungsstoff nach Anspruch 1 bis 2, **dadurch gekennzeichnet, dass** das organische Grundgerüst ausgewählt ist aus der Gruppe umfassend Alkydharze, ölmodifizierte Alkydharze, ungesättigte Polyester, natürliche Öle, Epoxide, Polyamide, thermoplastische Polyester, Polycarbonate, Polyethylene, Polybutylene, Polystyrole, Polypropylene, Ethylenpropylenco- und Terpolymere, Acrylate, Phenolharze, Polyoxymethylenhomo- und -copolymere, Polyurethane, Polysulfone, Polysulfidkautschuke, Nitrocellulose, Vinylbutyrate, Vinylpolymere, Ethylcellulose, Celluloseacetate und -butyrate, Reyon, Schellack, Wachse, Ethylencopolymere, Ethylenacrylsäurecopolymere, Ethylenacrylatoopolymere, organische Kautschuke, Silikonharze, wobei das Grundgerüst auch Silylgruppen enthalten kann.

4. Kleb-, Dicht- oder Beschichtungsstoff nach Anspruch 1 bis 3, **dadurch gekennzeichnet, dass** das polymere Grundgerüst ein Polyether, Polyester, Polyurethan oder Polyol ist.

5. Kleb-, Dicht- oder Beschichtungsstoff nach Anspruch 1 bis 4, **dadurch gekennzeichnet, dass** der Anteil der hochdispersen Kieselsäure 15 bis 35 Gew.-% bezogen auf das Gesamtgewicht des Kleb-, Dicht- oder Beschichtungsstoffs beträgt.

6. Kleb-, Dicht- oder Beschichtungsstoff nach Anspruch 1 bis 5, **dadurch gekennzeichnet, dass** die Kieselsäure eine durch Laserbeugung gemessene mittlere Teilchengröße d₅₀ von weniger als 25 µm, bevorzugt von 5 bis 25 µm aufweist.

7. Verwendung des Kleb-, Dicht- oder Beschichtungsstoffs nach Anspruch 1 bis 6 zum Verkleben von Kunststoffen, Metallen, Glas, Keramik, Holz, Holzwerkstoffen, Papier, Papierwerkstoffen, Gummi und Textilien.

## Claims

1. A silane-cross-linking adhesive, sealant or coating containing a polymer, consisting of an organic basic structure, which bears at least two alkoxy or acyloxysilyl groups, and at least one filler, **characterized in that** the polymer corresponds to the general formula (I) 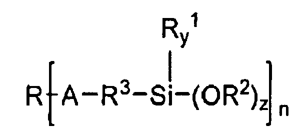
wherein R is an organic basic structure,
A represents a carbamate or urethane bond,
R¹ is an alkyl residue with 1 to 4 C atoms or OR²,
R² is an alkyl residue with 1 to 4 C atoms or an acyl residue with 1 to 4 C atoms,
R³ is a linear or branched, substituted or unsubstituted alkylene residue with 1 to 8 C atoms,
y = 0 to 2,
z = 3-y and
n = 1 to 10,000,
wherein the silyl residues may be identical or different and in the case of several residues R¹ or R², these may each be identical or different and the filler at least partly consists of highly dispersed silicic acid with a BET surface area from 10 to 90 m²/g and is contained in an amount from 1 to 60% by weight based on the total weight of the adhesive, sealant or coating, in the latter.

2. The adhesive, sealant or coating according to claim 1, **characterized in that** the highly dispersed silicic acid has a BET surface area from 35 to 65 m²/g.

3. The adhesive, sealant or coating according to claim 1 to 2, **characterized in that** the organic basic structure is selected from the group comprising alkyd resins, oil-modified alkyd resins, unsaturated polyesters, natural oils, epoxides, polyamides, thermoplastic polyesters, polycarbonates, polyethylenes, polybutylenes, polystyrenes, polypropylenes, ethylene-propylene co- and ter-polymers, acrylates, phenol resins, polyoxymethylene homo- and co-polymers, polyurethanes, polysulfones, polysulfide rubbers, nitrocellulose, vinyl butyrates, vinyl polymers, ethylcellulose, cellulose acetates and butyrates, rayon, shellac, waxes, ethylene copolymers, ethylene-acrylic acid copolymers, ethylene-acrylate copolymers, organic rubbers, silicone resins, wherein the basic structure may also contain silyl groups.

4. The adhesive, sealant or coating according to claim 1 to 3, **characterized in that** the polymeric basic structure is a polyether, polyester, polyurethane or polyol.

5. The adhesive, sealant or coating according to claim 1 to 4, **characterized in that** the proportion of the highly dispersed silicic acid is 15 to 35% by weight based on the total weight of the adhesive, sealant or coating.

6. The adhesive, sealant or coating according to claim 1 to 5, **characterized in that** the silicic acid has an average particle size d₅₀ of less than 25 µm, preferably from 5 to 25 µm, as measured by laser diffraction.

7. The use of the adhesive, sealant or coating according to claim 1 to 6, for gluing together plastics, metals, glass, ceramic, wood, wood materials paper, paper materials, rubber and textiles.

## Revendications

1. Adhésif, agent d'étanchéité ou agent d'enduction à activité de réticulation à base de silane, contenant un polymère constitué par un squelette de base organique qui porte au moins deux groupes alcoxy ou acyloxysilyle, et au moins une matière de charge, **caractérisé en ce que** le polymère répond à la formule générale (I) 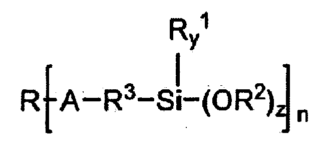
dans laquelle R représente un squelette de base organique,
A représente une liaison carbamate ou uréthane,
R¹ représente un résidu alkyle contenant de 1 à 4 atomes de carbone ou un groupe OR² ;
R² représente un résidu alkyle contenant de 1 à 4 atomes de carbone ou un résidu acyle contenant de 1 à 4 atomes de carbone ;
R³ représente un résidu alkylène à chaîne droite ou ramifiée, substitué ou non substitué contenant de 1 à 8 atomes de carbone ;
y = 0 à 2 ;
z = 3 - y ; et
n = 1 à 10000 ;
les radicaux silyle pouvant être identiques ou différents et, dans le cas de plusieurs radicaux R¹, respectivement R², ceux-ci peuvent être respectivement identiques ou différents, la matière de charge étant constituée, au moins en partie, d'acide silicique fortement dispersé possédant une surface BET de 10 à 90 m²/g et y étant présente en une quantité de 1 à 60 % en poids rapportés au poids total de l'adhésif, de l'agent d'étanchéité ou de l'agent d'enduction.

2. Adhésif, agent d'étanchéité ou agent d'enduction selon la revendication 1, **caractérisé en ce que** l'acide silicique fortement dispersé présente une surface BET de 35 à 65 m²/g.

3. Adhésif, agent d'étanchéité ou agent d'enduction selon les revendications 1 à 2, **caractérisé en ce que** le squelette de base organique est choisi parmi le groupe comprenant des résines alkydes, des résines alkydes modifiées à l'huile, des polyesters insaturés, des huiles naturelles, des époxydes, des polyamides, des polyesters thermoplastiques, des polycarbonates, des polyéthylènes, des polybutylènes, des polystyrènes, des polypropylènes, des copolymères et des terpolymères d'éthylène-propylène, des acrylates, des résines phénoliques, des homopolymères et des copolymères de polyoxyméthylène, des polyuréthanes, des polysulfones, des caoutchoucs de polysulfures, de la nitrocellulose, des vinylbutyrates, des polymères vinyliques, de l'éthylcellulose, des acétates et des butyrates de cellulose, de la rayonne, du Schellack, des cires, des copolymères d'éthylène, des copolymères d'éthylène-acide acrylique, des copolymères d'éthylène-acrylate, des caoutchoucs organiques, des résines de silicone, le squelette de base pouvant également contenir des groupes silyle.

4. Adhésif, agent d'étanchéité ou agent d'enduction selon l'une quelconque des revendications 1 à 3, **caractérisé en ce que** le squelette de base polymère est un polyéther, un polyester, un polyuréthane ou un polyol.

5. Adhésif, agent d'étanchéité ou agent d'enduction selon l'une quelconque des revendications 1 à 4, **caractérisé en ce que** la fraction de l'acide silicique fortement dispersé s'élève de 15 à 35 % en poids rapportés au poids total de l'adhésif, de l'agent d'étanchéité ou de l'agent d'enduction.

6. Adhésif, agent d'étanchéité ou agent d'enduction selon l'une quelconque des revendications 1 à 5, **caractérisé en ce que** l'acide silicique présente une granulométrie moyenne d₅₀, mesurée par diffraction laser, qui est inférieure à 25 µm, de préférence qui s'élève de 5 à 25 µm.

7. Utilisation de l'adhésif, de l'agent d'étanchéité ou de l'agent d'enduction selon l'une quelconque des revendications 1 à 6, pour le collage de matières synthétiques, de métaux, du verre, de la céramique, de bois, de matériaux à base de bois, du papier, de matériaux à base de papier, de caoutchouc et de textiles.
